# EUROPÄISCHE PATENTSCHRIFT

(11) **EP 2 447 516 B1**
(45) Veröffentlichungstag und Bekanntmachung des Hinweises auf die Patenterteilung: **24.07.2019**
(21) Anmeldenummer: 11007664.3
(22) Anmeldetag: 21.09.2011
(51) Int. Cl.: F02D 41/24, F02D 41/00, F01N 11/00, F02D 41/14, F02M 26/06, F02M 26/05

(54) **Verfahren zur Bestimmung eines Drucks am Ausgang einer Abgasanlage**
Method for determining pressure at the outlet of an exhaust gas system
Procédé de détermination d'une pression à la sortie d'un système de gaz d'échappement

(30) Priorität: 30.10.2010 DE 102010050161
(43) Veröffentlichungstag der Anmeldung: 02.05.2012
(73) Patentinhaber: Volkswagen Aktiengesellschaft, 38440 Wolfsburg (DE)
(72) Erfinder: Jeschke, Jens, 38106 Braunschweig (DE)

(56) Entgegenhaltungen:
- EP-A2- 1 091 106
- DE-A1- 10 328 056
- DE-A1-102004 043 365
- DE-A1-102007 009 689
- US-A1- 2003 004 677

## Beschreibung

Die vorliegende Erfindung betrifft ein Verfahren zur Bestimmung eines Drucks im Ausgang einer Abgasanlage eines Verbrennungsmotorsystems eines Fahrzeugs, insbesondere eines Verbrennungsmotorsystems mit einem Abgasturbolader und einer Hochdruckabgasrückführung sowie einer Niederdruckabgasrückführung.

Bei Verbrennungsmotorsystemen, wie z.B. Dieselmotoren, werden Abgasrückführungen verwendet, um einen Teil der Verbrennungsabgase des Verbrennungsmotors zu einer Frischluftzufuhr des Verbrennungsmotors zurück zu führen, um diesen Teil der Verbrennungsabgase zusammen mit Frischluft dem Verbrennungsmotor erneut zuzuführen. Bei Verbrennungsmotorsystemen, insbesondere Dieselmotoren, mit einem Abgasturbolader wird zwischen einer Hochdruckabgasrückführung und einer Niederdruckabgasrückführung unterschieden. Die Hochdruckabgasrückführung verbindet einen Behälter vor einer Abgasturbine des Abgasturboladers mit einem Saugrohr des Verbrennungsmotors über ein Hochdruckabgasrückführungsventil. Die Niederdruckabgasrückführung verbindet einen Ausgang der Abgasanlage des Verbrennungsmotors, beispielsweise hinter einem Partikelfilter, mit einer Frischluftzufuhr vor einem Verdichter des Abgasturboladers. Für eine genaue Steuerung der Abgasrückführung ist eine möglichst genaue Kenntnis der Strömungseigenschaften der Abgasrückführung und der Druckverhältnisse innerhalb der Abgasrückführung von großer Wichtigkeit.

In diesem Zusammenhang ist aus der US 7,474,954 B1 ein Verfahren zum Betreiben einer elektronisch gesteuerten Verbrennungskraftmaschine bekannt, bei welchem ein Differenzdrucksensor einer Hochdruckabgasrückführung automatisch kalibriert wird. Dazu wird bei abgeschaltetem Motor eine Ausgabe des Differenzdrucksensors überwacht und eine tatsächliche Abweichung bestimmt und gegebenenfalls ein entsprechender Versatzwert nicht flüchtig gespeichert. Die US 2008/0295514 A1 betrifft ein Steuerverfahren für einen Verbrennungsmotor mit einer Hochdruckabgasrückführung und einer Niederdruckabgasrückführung, wobei eine Abgasrückführungsmenge derart eingestellt wird, dass eine Temperatur eines Abgaskatalysators innerhalb eines Zielbereichs liegt. Um einen Öffnungsbetrag eines Hochdruckabgasrückführungsventils und eines Niederdruckabgasrückführungsventils zu lernen, wird bestimmt, ob eine Kraftstoffzufuhr abgeschaltet ist oder ob sich der Verbrennungsmotor im Leerlauf befindet. In Abhängigkeit von dieser Bestimmung wird ein Lernzyklus durchgeführt, bei welchem das Niederdruckabgasrückführungsventil und das Hochdruckabgasrückführungsventil vollständig geschlossen werden und dann in vorbestimmten Schritten vollständig geöffnet werden. Die EP 1 870 584 A2 betrifft eine Abgasrückführungsvorrichtung eines Verbrennungsmotors mit einem Abgasturbolader, einer Niederdruckabgasrückführung und einer Hochdruckabgasrückführung. Gemäß einer Ausführungsform wird eine Luftzufuhrmenge und die Abgasrückführungsrate auf Referenzwerte eingestellt und auf der Grundlage eines von einem Differenzdrucksensor erfassten Differenzdrucks über einem Ventil wird die Beziehung zwischen der Niederdruckabgasrückführungsgasmenge, welche durch die Niederdruckabgasrückführung strömt, und einem Öffnungsgrad von Vorrichtungen, welche in der Lage sind, die Abgasrückführungsgasmenge einzustellen, gelernt und korrigiert. Schließlich offenbart die WO 2009/037543 A1 eine Abgasrückführungsvorrichtung für einen Verbrennungsmotor, welche eine Hochdruckabgasrückführung und eine Niederdruckabgasrückführung aufweist. Die Hochdruckabgasrückführung wird derart gesteuert, dass eine Sauerstoffkonzentration der in die Zylinder angesaugten Luft einem Zielwert entspricht, welcher gemäß dem Betriebszustand des Verbrennungsmotors eingestellt ist. Die Niederdruckabgasrückführung wird derart gesteuert, dass Niederdruckabgasrückführungsgas mit einer Zielströmungsrate in den Einlass befördert wird.

Aus dem Dokument US 2003/004677 A1 ist ein Verfahren zur Bestimmung eines Drucks in einem Abgaskrümmer eines Verbrennungsmotorsystems eines Fahrzeugs bekannt. Dazu wird ein Massenstrom durch das Verbrennungsmotorsystem und ein Umgebungsdruck erfasst. Der Umgebungsdruck dient hier als Näherungswert für den Druck im Ausgang der Abgasanlage.

Das Dokument DE 10 2004 043 365 A1 zeigt ein Verfahren zum Bestimmen des Abgasgegendrucks, insbesondere vor einem Partikelfilter, im Abgasstrang einer Brennkraftmaschine, die mit einer Hochdruckabgasrückführung ausgestattet ist. Es werden mit dem Motorbetrieb zusammenhängende Einflussgrößen auf der Basis eines Modells herangezogen, die mindestens eine Zustandsgröße des Abgases, insbesondere die Abgastemperatur herangezogen.

Das Dokument DE 103 28 056 A1 beschreibt ein Verfahren und eine Vorrichtung zum Betrieb einer Brennkraftmaschine mit einem Abgasturbolader und einer Hochdruckabgasrückführung, welches eine genaue Modellierung des Abgasdruckes ermöglicht.

Die Niederdruckabgasrückführung wird kontinuierlich weiterentwickelt, wobei ein Entwicklungsschwerpunkt eine Reduktion von Strömungsverlusten durch den Niederdruckabgasrückführungskreis ist. Bei Strömungsverlust-optimierten Systemen ergeben sich jedoch Probleme des Gesamtsystems hinsichtlich einer Robustheit einer Zumessung von Niederdruckabgasrückführungsgas. Wird ein derartiges System beispielsweise auf einem Motorprüfstand oder einem Rollenprüfstand, beispielsweise zur Zertifizierung, betrieben, wird es durch die Abgasmesstechnik gestört. Durch die Absaugung bzw. Verdünnung des Abgases entsteht am Ende der Abgasanlage (bzw. im Ausgang der Abgasanlage) ein anderer Unterdruck als er bei einem Stillstand des Fahrzeugs entstehen würde. Dieser Unterdruck kann dazu führen, dass sogar Frischluft eines Einlassbereichs vor dem Verdichter direkt durch die Niederdruckabgasrückführung in die Abgasanlage gelangt. Insgesamt reagiert ein Strömungsverlust-optimiertes System empfindlich auf Druckänderungen am Ende der Abgasanlage. Bereits eine geringe Störung des Abgasdrucks von beispielsweise 10 hPa stört die Niederdruckabgasrückführung erheblich, da eine derartige Störung in einer ähnlichen Größenordnung wie das notwendige Spülgefälle der Niederdruckabgasrückführung ist. Eine Erfassung des Drucks im Ausgang der Abgasanlage mit Hilfe eines Drucksensors ist technisch nur schwierig zu realisieren, da der Sensor vorzugsweise eine Genauigkeit von unter 1 hPa bei einem Berstdruck von beispielsweise 1000 hPa aufweisen müsste und darüber hinaus im technisch schwierigen Umfeld der Abgasanlage einsetzbar sein müsste.

Aufgabe der vorliegenden Erfindung ist es daher, den Druck im Ausgang der Abgasanlage zu bestimmen, um eine entsprechende Adaption des Abgasdrucks am Ende der Abgasanlage durchführen zu können.

Gemäß der vorliegenden Erfindung wird diese Aufgabe durch ein Verfahren zur Bestimmung eines Drucks im Ausgang einer Abgasanlage eines Verbrennungsmotorsystems nach Anspruch 1 und ein Verbrennungsmotorsystem für ein Fahrzeug nach Anspruch 15 gelöst. Die abhängigen Ansprüche definieren bevorzugte und vorteilhafte Ausführungsformen der Erfindung.

Erfindungsgemäß wird ein Verfahren zur Bestimmung eines Drucks im Ausgang einer Abgasanlage eines Verbrennungsmotorsystems eines Fahrzeugs bereitgestellt. Dabei umfasst das Verbrennungsmotorsystem einen Verbrennungsmotor mit einem Saugrohr und einem Abgasausgang; eine Frischluftzufuhr, die das Saugrohr des Verbrennungsmotors mit der Umgebung verbindet; eine Abgasanlage, die den Abgasausgang des Verbrennungsmotors mit der Umgebung verbindet; einen Abgasturbolader mit einem zwischen der Frischluftzufuhr und dem Saugrohr angeordneten Verdichter und einer zwischen dem Abgasausgang des Verbrennungsmotors und der Abgasanlage angeordneten Turbine; sowie eine Niederdruckabgasrückführung mit einem Niederdruckabgasrückführungsventil auf, welche die Frischluftzufuhr mit dem Ausgang der Abgasanlage koppelt. Bei dem Verfahren wird ein Massenstrom durch das Verbrennungsmotorsystem und ein Umgebungsdruck der Frischluftzufuhr des Verbrennungsmotorsystems erfasst. Weiterhin wird eine Drosselung des Massenstroms durch das Verbrennungsmotorsystem mit Hilfe eines Strömungsmodells des Verbrennungsmotorsystems bestimmt. In Abhängigkeit von dem Massenstrom, dem Umgebungsdruck, einer Drosselung des Massenstroms durch das Verbrennungsmotorsystem und einer Position des Niederdruckabgasrückführungsventils wird der vom Umgebungsdruck abweichende Druck im Ausgang der Abgasanlage automatisch bestimmt. Somit ist kein Drucksensor im oder am Ausgang der Abgasanlage erforderlich. Das Erfassen des Massenstroms durch das Verbrennungsmotorsystem ist beispielsweise mit Hilfe eines Heißfilmluftmassenmessers in der Frischluftzufuhr möglich. Ein derartiger Heißfilmluftmassenmesser ist üblicherweise ohnehin in Verbrennungsmotorsystemen verbaut. Die Drosselung des Massenstroms durch das Verbrennungsmotorsystem kann, wie nachfolgend gezeigt werden wird, bei bestimmten Betriebszuständen des Verbrennungsmotorsystems verhältnismäßig einfach und genau bestimmt werden, so dass der Druck im Ausgang der Abgasanlage auf der Grundlage dieser Informationen mit hoher Genauigkeit bestimmt werden kann.

In das Strömungsmodell zur Bestimmung der Drosselung des Massenstroms durch das Verbrennungsmotorsystem können beispielsweise eine Motorfüllung, welche aus einem Saugrohrdruck und einer Saugrohrtemperatur bestimmt wird; ein Hochdruckabgasrückführungsmassenstrom, welcher aus einem Druck vor einer Turbine eines Abgasturboladers des Verbrennungsmotorsystems, einem Druck im Saugrohr und einer Ventilposition bestimmt wird, eine Frischluftmasse, welche mit Hilfe des Heißfilmluftmassensensors bestimmt wird; und ein Niederdruckabgasrückführungsmassenstrom einfließen. Aus dem Strömungsmodell, dem Umgebungsdruck bei der Frischluftzufuhr und einer Ventilposition eines Niederdruckabgasrückführungsventils lässt sich dann der Druck im Ausgang der Abgasanlage bestimmen.

Gemäß einer weiteren Ausführungsform wird das Verfahren bei einem Stillstand eines Verbrennungsmotors des Verbrennungsmotorsystems durchgeführt. Dadurch vereinfacht sich das Strömungsmodell und die Drosselung des Massenstroms durch das Verbrennungsmotorsystem kann erheblich einfacher und genauer bestimmt werden.

Das Verbrennungsmotorsystem weist eine Niederdruckabgasrückführung mit einem Niederdruckabgasrückführungsventil auf. Die Niederdruckabgasrückführung koppelt die Frischluftzufuhr mit dem Ausgang der Abgasanlage. Die Drosselung des Massenstroms durch das Verbrennungsmotorsystem wird bestimmt, indem eine Drosselung eines Massenstroms durch die Niederdruckabgasrückführung bestimmt wird. Der Massenstrom durch die Niederdruckabgasrückführung hängt dabei von einer Einstellung des Niederdruckabgasrückführungsventils ab. Diese Drosselung des Massenstroms durch die Niederdruckabgasrückführung kann beispielsweise in einem Kennfeld oder in einer Kennlinie abgelegt sein und dementsprechend durch Auslesen des Kennfelds oder der Kennlinie bestimmt werden.

Weiterhin kann das Verbrennungsmotorsystem eine Drosselklappe zur Beeinflussung eines Massenstroms von der Frischluftzufuhr zu einem Saugrohr des Verbrennungsmotors aufweisen. Die Drosselung des Massenstroms durch das Verbrennungsmotorsystem kann in diesem Fall bestimmt werden, indem eine Drosselung eines Massenstroms durch den Verbrennungsmotor und die Drosselklappe in Abhängigkeit von einer Einstellung der Drosselklappe bestimmt wird.

Weiterhin kann das Fahrzeug einen Abgasturbolader und eine Hochdruckabgasrückführung umfassen. Der Abgasturbolader umfasst eine Turbine, welche zwischen einem Abgasausgang des Verbrennungsmotors und der Abgasanlage angeordnet ist, und einen mit der Turbine gekoppelten Verdichter, welcher zwischen der Frischluftzufuhr und dem Saugrohr angeordnet ist. Die Hochdruckabgasrückführung koppelt den Abgasausgang des Verbrennungsmotors mit dem Saugrohr über ein Hochdruckabgasrückführungsventil. Zur Bestimmung der Drosselung des Massenstroms durch das Verbrennungsmotorsystem wird eine Drosselung des Massenstroms durch den Verdichter, die Turbine und die Hochdruckabgasrückführung in Abhängigkeit von einer Einstellung des Hochdruckabgasrückführungsventils bestimmt.

Für einen stillstehenden Motor hängt die Drosselung des Massenstroms durch das Verbrennungsmotorsystem nur von der Einstellung der entsprechenden Ventile, beispielsweise dem Niederdruckabgasrückführungsventil, der Drosselklappe und dem Hochdruckabgasrückführungsventil, ab. Daher kann die Drosselung des Massenstroms durch die verschiedenen Zweige des Verbrennungsmotorsystems verhältnismäßig einfach und genau bestimmt werden. Eine weitere Vereinfachung der Bestimmung der Drosselung des Massenstroms durch das Verbrennungsmotorsystem ergibt sich, wenn einzelne Zweige des Verbrennungsmotorsystems geschlossen oder weitestgehend geschlossen werden, so dass durch diese Zweige der Massenstrom näherungsweise null ist.

Beispielsweise können zur Durchführung des Verfahrens die Drosselklappe und das Hochdruckabgasrückführungsventil geschlossen werden. Das Niederdruckabgasrückführungsventil bleibt hingegen geöffnet, so dass der Massenstrom durch das Verbrennungsmotorsystem im Wesentlichen durch die Niederabgasrückführung verläuft.

Eine entsprechende Drosselung des Massenstroms durch die Niederdruckabgasrückführung kann in Abhängigkeit einer Einstellung des Niederdruckabgasrückführungsventils verhältnismäßig genau bestimmt werden. Weiterhin kann das Verfahren vereinfacht werden, indem das Niederdruckabgasrückführungsventil vollständig geöffnet wird, so dass die Drosselung des Massenstroms durch das Verbrennungsmotorsystem nur durch die Drosselung des Massenstroms durch die Niederdruckabgasrückführung bei voll geöffnetem Niederdruckabgasrückführungsventil bestimmt wird. Diese Drosselung kann beispielsweise aus Konstruktionsdaten der Niederdruckabgasrückführung vorab bestimmt werden.

Gemäß einer weiteren Ausführungsform werden die Drosselklappe, das Hochdruckabgasrückführungsventil und das Niederdruckabgasrückführungsventil geöffnet. Vorzugsweise werden diese Ventile und die Drosselklappe vollständig geöffnet. Bei Stillstand des Verbrennungsmotors kann eine Drosselung des Massenstroms durch das so eingestellte Verbrennungsmotorsystem vorab beispielsweise aus Konstruktionsdaten oder Messdaten bestimmt werden, so dass die Drosselung des Massenstroms durch das Verbrennungsmotorsystem mit hoher Genauigkeit vorliegt.

Gemäß einer weiteren Ausführungsform werden mehrere Drücke im Ausgang der Abgasanlage bei unterschiedlichen Einstellungen der Drosselklappe, des Hochdruckabgasrückführungsventils und des Niederdruckabgasrückführungsventils nacheinander bestimmt. Aus den mehreren Drücken wird der Druck im Ausgang der Abgasanlage durch beispielsweise eine Mittelung bestimmt. Indem der Druck im Ausgang der Abgasanlage bei verschiedenen Einstellungen der Ventile und der Drosselklappe durchgeführt wird, können Fehler, beispielsweise in Bezug auf die Drosselung des Massenstroms durch das entsprechend konfigurierte Verbrennungsmotorsystem oder in Bezug auf die Erfassung des Umgebungsdrucks oder des Massenstroms durch das Verbrennungsmotorsystem, ausgemittelt werden und somit der Druck im Ausgang der Abgasanlage mit hoher Genauigkeit bestimmt werden.

Gemäß einer weiteren Ausführungsform wird das Verfahren in einem Schubbetrieb des Verbrennungsmotors durchgeführt. Im Schubbetrieb des Verbrennungsmotors vereinfacht sich das Strömungsmodell, da keine Einflüsse eines Verbrennungsvorgangs zu berücksichtigen sind. Demzufolge kann die Drosselung des Massenstroms durch das Verbrennungsmotorsystem einfacher und genauer bestimmt werden.

Gemäß einer Ausführungsform weist das Verbrennungsmotorsystem eine Niederdruckabgasrückführung mit einem Niederdruckabgasrückführungsventil auf. Die Niederdruckabgasrückführung koppelt die Frischluftzufuhr mit dem Ausgang der Abgasanlage.

Das Verbrennungsmotorsystem weist ferner eine Drosselklappe zur Beeinflussung eines Massenstroms von der Frischluftzufuhr zu einem Saugrohr des Verbrennungsmotors auf. Die Drosselklappe wird zur Durchführung des Verfahrens im Schubbetrieb geschlossen und die Drosselung des Massenstroms durch das Verbrennungsmotorsystem wird bestimmt, indem eine Drosselung eines Massenstroms durch die Niederdruckabgasrückführung in Abhängigkeit einer Einstellung des Niederdruckabgasrückführungsventils bestimmt wird. Durch Schließen der Drosselklappe bewegt sich der Massenstrom durch das Verbrennungsmotorsystem im Wesentlichen durch die Niederdruckabgasrückführung, wodurch das Strömungsmodell vereinfacht und die Drosselung des Massenstroms durch das Verbrennungsmotorsystem einzig durch die Drosselung des Massenstroms in der Niederdruckabgasrückführung bestimmt wird. Diese lässt sich beispielsweise bei voll geöffnetem Niederdruckabgasrückführungsventil beispielsweise vorab messen oder aus Konstruktionsdaten gewinnen.

Gemäß einer weiteren Ausführungsform weist das Fahrzeug einen Abgasturbolader und eine Hochdruckabgasrückführung auf. Der Abgasturbolader umfasst eine Turbine, welche zwischen einem Abgasausgang des Verbrennungsmotors und der Abgasanlage angeordnet ist, und einen mit der Turbine gekoppelten Verdichter, welche zwischen der Frischluftzufuhr und dem Saugrohr angeordnet ist. Die Hochdruckabgasrückführung koppelt den Abgasausgang mit dem Saugrohr über ein Hochdruckabgasrückführungsventil. Zur Durchführung des Verfahrens im Schubbetrieb wird das Hochdruckabgasrückführungsventil geöffnet. Dadurch kann eine im Motor befindliche Füllung von beispielsweise Luft oder Abgas bei geschlossener Drosselklappe im Schubbetrieb des Fahrzeugs durch den Motor und die Hochdruckabgasrückführung zirkulieren, ohne den Massenstrom durch das Verbrennungsmotorsystem zu beeinflussen. Somit bewegt sich der Massenstrom durch das Verbrennungsmotorsystem im Wesentlichen nur durch die Niederdruckabgasrückführung, wodurch, wie zuvor beschrieben, die Drosselung des Massenstroms durch das Verbrennungsmotorsystem verhältnismäßig einfach und genau bestimmt werden kann und somit der Druck im Ausgang der Abgasanlage ebenfalls genau bestimmbar ist.

Gemäß einer weiteren Ausführungsform wird der Massenstrom durch das Verbrennungsmotorsystem mit Hilfe eines Heißfilmluftmassenmessers erfasst, welcher in der Frischluftzufuhr des Verbrennungsmotors angeordnet ist. Gemäß dieser Ausführungsform wird der Heißfilmluftmassenmesser kalibriert, indem die Drosselklappe geschlossen wird, das Hochdruckabgasrückführungsventil geöffnet wird und das Niederdruckabgasrückführungsventil geschlossen wird. Durch Schließen der Drosselklappe und der Niederdruckabgasrückführung wird der Massenstrom durch das Verbrennungsmotorsystem im Wesentlichen vollständig unterbunden, so dass der Heißfilmluftmassenmesser in diesem Zustand auf seinen Nullwert kalibriert werden kann.

Gemäß der vorliegenden Erfindung wird weiterhin ein Verbrennungsmotorsystem für ein Fahrzeug bereitgestellt. Dabei umfasst das Verbrennungsmotorsystem einen Verbrennungsmotor mit einem Saugrohr und einem Abgasausgang; eine Frischluftzufuhr, die das Saugrohr des Verbrennungsmotors mit der Umgebung verbindet; eine Abgasanlage, die den Abgasausgang des Verbrennungsmotors mit der Umgebung verbindet; einen Abgasturbolader mit einem zwischen der Frischluftzufuhr und dem Saugrohr angeordneten Verdichter und einer zwischen dem Abgasausgang des Verbrennungsmotors und der Abgasanlage angeordneten Turbine; sowie eine Niederdruckabgasrückführung mit einem Niederdruckabgasrückführungsventil auf, welche die Frischluftzufuhr mit dem Ausgang der Abgasanlage koppelt. Das Verbrennungsmotorsystem umfasst ferner ein erstes Erfassungsmittel zum Erfassen eines Massenstroms durch das Verbrennungsmotorsystem, ein zweites Erfassungsmittel zum Erfassen eines Umgebungsdrucks an einer Frischluftzufuhr des Verbrennungsmotorsystems und eine Verarbeitungseinheit. Die Verarbeitungseinheit bestimmt einen vom Umgebungsdruck unterschiedliche Druck in einem Ausgang der Abgasanlage des Verbrennungsmotorsystems in Abhängigkeit von dem Massenstrom, dem Umgebungsdruck und einer Drosselung des Massenstroms durch das Verbrennungsmotorsystem. Vorzugsweise ist das Verbrennungsmotorsystem zur Durchführung des zuvor beschriebenen Verfahrens oder einer seiner Ausführungsformen geeignet und umfasst daher auch die im Zusammenhang mit dem Verfahren und den Ausführungsformen beschriebenen Vorteile.

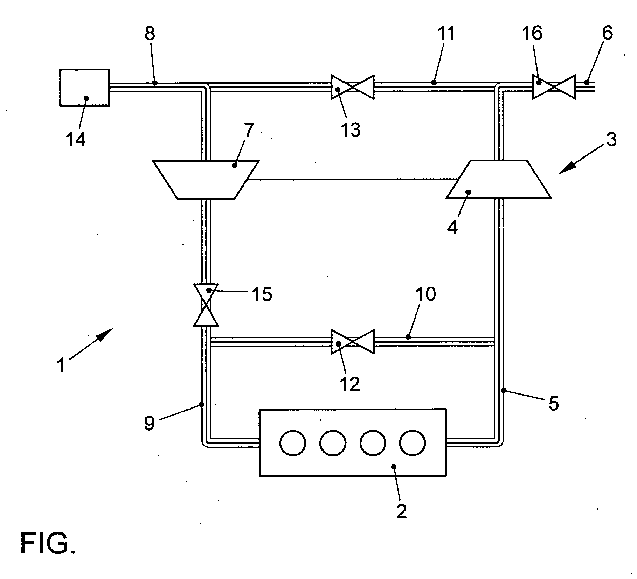

Die vorliegende Erfindung wird nachfolgend unter Bezugnahme auf die beigefügte Zeichnung anhand bevorzugter Ausführungsformen erläutert werden.

Die einzige Figur zeigt schematisch ein Verbrennungsmotorsystem gemäß einer Ausführungsform der vorliegenden Erfindung.

Die Figur zeigt schematisch ein Verbrennungsmotorsystem 1, welches einen Verbrennungsmotor 2 und einen Abgasturbolader 3 umfasst. Der Abgasturbolader 3 umfasst eine Turbine 4, welche zwischen einem Abgasausgang 5 des Verbrennungsmotors 2 und einer Abgasanlage 6 des Verbrennungsmotorsystems 1 angeordnet ist. Weiterhin umfasst der Abgasturbolader 3 einen Verdichter 7, welcher mit der Turbine 4 mechanisch gekoppelt ist und zwischen einer Frischluftzufuhr 8 und einem Saugrohr 9 des Verbrennungsmotors 2 angeordnet ist. Das Verbrennungsmotorsystem 1 umfasst weiterhin eine Hochdruckabgasrückführung 10 und eine Niederdruckabgasrückführung 11. Die Hochdruckabgasrückführung 10 koppelt den Abgasausgang 5 mit dem Saugrohr 9 und umfasst ein Hochdruckabgasrückführungsventil 12, welches in der Lage ist, einen Massenstrom durch die Hochdruckabgasrückführung 10 zu beeinflussen. Die Niederdruckabgasrückführung 11 verbindet die Abgasanlage 6 mit der Frischluftzufuhr 8 und umfasst ein Niederdruckabgasrückführungsventil 13, welches in der Lage ist, einen Massenstrom durch die Niederdruckabgasrückführung 11 zu beeinflussen. Am Eingang der Frischluftzufuhr 8 ist eine Vorrichtung 14 angeordnet, welche in der Lage ist, einen Massenstrom durch die Frischluftzufuhr 8 zu bestimmen und einen Druck am Eingang der Frischluftzufuhr 8 zu messen. Die Vorrichtung 14 kann zur Bestimmung des Frischluftmassenstroms beispielsweise einen Heißfilmluftmassenmesser und zur Bestimmung des Luftdrucks einen Luftdrucksensor umfassen. Schließlich ist zwischen dem Verdichter 7 und dem Saugrohr 9 eine Drosselklappe 15 angeordnet, welche in der Lage ist, einen Massenstrom von dem Verdichter 7 in das Saugrohr 9 zu beeinflussen. Das Verbrennungsmotorsystem 1 kann weitere Sensoren umfassen, welche aus Gründen der Übersichtlichkeit in der Figur nicht dargestellt sind. Diese weiteren Sensoren umfassen beispielsweise einen Drucksensor in dem Saugrohr 9 zur Bestimmung eines Saugrohrdrucks, einen Temperatursensor in dem Saugrohr 9 zur Bestimmung einer Saugrohrtemperatur und einen Drucksensor in dem Abgasausgang 5 zum Erfassen eines Drucks vor der Turbine 4.

Aus der Massenstrombilanz an der Eingangsseite des Verbrennungsmotors 2 lässt sich prinzipiell der Massenstrom durch die Niederdruckabgasrückführung 11 folgendermaßen bestimmen:
Niederdruckabgasrückführungsmassenstrom
= Motorfüllung
- Hochdruckabgasrückführungsmassenstrom
- Frischluftmassenstrom.

Die Motorfüllung kann beispielsweise aus dem Saugrohrdruck und der Saugrohrtemperatur bestimmt werden, der Hochdruckabgasrückführungsmassenstrom aus dem Druck vor der Turbine 3, dem Druck im Saugrohr 9 und einer Ventilposition des Hochdruckabgasrückführungsventils 12, und der Frischluftmassenstrom mit Hilfe des Heißfilmluftmassenmessers 14. Es wird allerdings schnell klar, dass in diese Massenstrombilanz erhebliche Mess- und Modellierungsfehler eingehen, beispielsweise gehen in die Motorfüllung Saugrohrdruckfehler und Mischungstemperaturfehler, in den Frischluftmassenstrom Fehler des Heißfilmluftmassenmessers 14 und Pulsationsfehler, in die Ventilposition des Hochdruckabgasrückführungsventils Fehler der effektiven Fläche des Ventils durch Verschmutzung und Bauteiltoleranzen, und in den Druck vor der Turbine 4 Fehler des Heißfilmluftmassenmessers 14 sowie Turbinenmodellfehler ein.

Für eine modelbasierte Regelung des Verbrennungsmotorsystems 1, insbesondere für eine modelbasierte Regelung eines Massenstroms durch die Niederdruckabgasrückführung 11, sind Informationen über einen Druck vor und hinter dem Niederdruckabgasrückführungsventil 13 und der Ventilposition des Niederdruckabgasrückführungsventils 13 erforderlich. Sofern kein Unterdruck am Ausgang der Abgasanlage 5 anliegt, unterscheidet sich der Druck am Ende der Abgasanlage 6 von dem Umgebungsdruck lediglich durch Strömungsverluste der Abgasanlage. Wenn jedoch am Ende der Abgasanlage 6 beispielsweise aufgrund einer Absaugung ein Unterdruck entsteht, ist es unerlässlich, den Druckunterschied am Ende der Abgasanlage zum Umgebungsdruck zu berücksichtigen und in einer entsprechenden Steuerung zu adaptieren. Generell kann dazu ein Vergleich eines modellierten Niederdruckabgasrückführungsmassenstroms und der Massenstrombilanz verwendet werden. Der modellierte Niederdruckabgasrückführungsmassenstrom hängt von dem Druck vor dem Niederdruckabgasrückführungsventil, d.h. dem unbekannten Druck in der Abgasanlage 6, dem Druck hinter dem Niederdruckabgasrückführungsventil, d.h. dem Druck in der Frischluftzufuhr 8 also dem Umgebungsluftdruck, und der Ventilposition des Niederdruckabgasrückführungsventils ab. Die obige Gleichung zur Massenstrombilanz kann daher verwendet werden, um zu jeder Zeit im Betrieb des Motors 2 den Unterdruck am Ende der Abgasanlage 6 zu berücksichtigen und somit die Regelung des Motors 2 zu adaptieren. In diesem Fall überlagern sich jedoch alle oben genannten Fehler, welche in die Massenstrombilanz eingehen, gleichzeitig und das Adaptionsergebnis wird daher mit einer großen Adaptionsunschärfe versehen sein.

Gemäß der vorliegenden Erfindung werden daher spezielle Motorzustände zur Bestimmung des Drucks im Ausgang der Abgasanlage 6 und somit für die Adaptation der Regelung des Verbrennungsmotorsystems 1 verwendet. Beispielsweise können eine Vielzahl der oben genannten Fehlerquellen ausgeschlossen werden, wenn die Druckbestimmung im Motorstillstand, beispielsweise vor einem Start des Motors oder bei einem Start-/Stopp-System im Stopp-Betrieb durchgeführt wird. Im Motorstillstand ist beispielsweise die Motorfüllung je nach Position der Kurbelwelle konstant oder sogar null. Weiterhin ist die Motorfüllung nicht mehr mischungstemperaturabhängig, da keine heißen Gase über die Hochdruckabgasrückführung zurückgeführt werden können. Weiterhin treten keine Pulsationsfehler am Heißfilmluftmassenmesser auf, da die Kolben des Verbrennungsmotors stillstehen. Darüber hinaus können bei Motorstillstand Ventile, wie z.B. die Abgasrückführungsventile 12, 13, und Klappen, wie z.B. die Drosselklappe 15 oder eine Abgasklappe 16 beliebig angesteuert werden, da keine Verbrennung stattfindet. Beispielsweise führt ein Schließen der Drosselklappe 15 und des Hochdruckabgasrückführungsventils 12 dazu, dass in die Massenstrombilanz lediglich Werte des Heißfilmluftmassenmessers und des Niederdruckabgasführungsventils eingehen.

Ein weiterer spezieller geeigneter Motorzustand für die Bestimmung des Drucks im Ausgang der Abgasanlage 6 und die Adaption der Regelung für das Verbrennungsmotorsystem 1 ist ein Schubbetrieb des Motors, da in dieser Betriebsart ebenfalls keine heißen Abgase über die Hochdruckabgasrückführung zum Saugrohr 9 zurückgeführt werden und die Ventile 12, 13 und Klappen 15, 16 beliebig angesteuert werden können.

Nachfolgend werden unter Bezugnahme auf die Figur exemplarisch verschiedene Motorzustände beschrieben, in denen der Druck im Ausgang der Abgasanlage 6 mit hoher Genauigkeit bestimmt werden kann und somit eine Adaptation der Regelung des Verbrennungsmotorsystems 1 an den Druck im Ausgang der Abgasanlage 6 durchgeführt werden kann.

Bei einem ersten Beispiel befindet sich der Verbrennungsmotor 2 im Stillstand. Das Niederdruckabgasrückführungsventil 13 ist vollständig geöffnet, die Abgasklappe 16 ist geöffnet, die Drosselklappe 15 ist geschlossen und das Hochdruckabgasrückführungsventil 12 ist geschlossen. Am Ende der Abgasanlage 6 herrscht ein Unterdruck, wie er beispielsweise auf einem Rollenprüfstand durch eine Absaugung entstehen kann. Der Massenstrom, der durch den Heißfilmluftmassenmesser 14 gemessen wird, geht direkt durch die Niederdruckabgasrückführung 11 in die Abgasanlage 6. Durch Schließen des Niederdruckabgasrückführungsventils 13 kann der Massenstrom des Heißfilmluftmassenmessers reduziert werden. Bei vollständig geschlossenem Niederdruckabgasrückführungsventil 13 geht der Massenstrom zumindest theoretisch gegen null. Sollte dies nicht der Fall sein, ist entweder der Heißfilmluftmassenmesser falsch kalibriert oder ein Teilmassenstrom strömt beispielsweise durch Blow-by-Leitungen oder durch den Abgasturbolader 3. Dieser Grundeinfluss des Systems kann ermittelt werden, indem alle Steller des Systems verschlossen werden. Somit kann bei geschlossenem Niederdruckabgasrückführungsventil 13 der Heißfilmluftmassenmesser 14 kalibriert werden, insbesondere kann eine Offset-Korrektur durchgeführt werden. Bei geöffnetem Niederdruckabgasrückführungsventil 13 kann dann auf der Grundlage des Umgebungsdrucks an der Frischluftzufuhr 8 und einer Drosselung des Massenstroms durch die Frischluftzufuhr 8, die Niederdruckabgasrückführung 11 einschließlich des Niederdruckabgasrückführungsventils 13 und der Abgasanlage 6, und dem Massenstrom, welcher von dem Heißfilmluftmassenmesser 14 bestimmt wird, ermittelt werden. Bei einem Überdruck am Ende der Abgasanlage 6 würde der Massenstrom durch den Heißfilmluftmassenmesser 14 beim Schließen des Niederdruckabgasrückführungsventils steigen, d.h. ein negativer Massenstrom würde durch das Schließen des Niederdruckabgasrückführungsventils 13 in Richtung null verändert.

Bei einer zweiten beispielhaften Durchführung des Verfahrens befindet sich der Verbrennungsmotor 2 im Stillstand, das Niederdruckabgasrückführungsventil 13 ist vollständig geöffnet, die Abgasklappe 16 ist geöffnet, die Drosselklappe 15 ist geschlossen und das Hochdruckabgasrückführungsventil 12 ist geschlossen. Es wird angenommen, dass am Ende der Abgasanlage 6 ein Unterdruck herrscht. Der Massenstrom, der von dem Heißfilmluftmassenmesser 14 gemessen wird, geht wiederum direkt durch die Niederdruckabgasrückführung 11 in die Abgasanlage 6. Durch Schließen der Abgasklappe 16 kann dieser Massenstrom verändert werden. Die Abgasklappe 16 kann beispielsweise soweit geschlossen werden, dass kein Massenstrom oder nur noch ein minimaler Massenstrom über die Niederdruckabgasrückführung 11 fließt. In diesem Zustand kann wiederum eine Offsetfehler-Kalibrierung des Heißfilmluftmassenmessers 14 durchgeführt werden. Bei geöffneter Abgasklappe kann aus dem vom Heißfilmluftmassenmesser 14 gemessenen Massenstrom, dem Umgebungsdruck in der Frischluftzufuhr 8 und einer Drosselung des Massenstroms durch die Frischluftzufuhr 8, die Niederdruckabgasrückführung 11 und die Abgasanlage 6 der Unterdruck am Ende der Abgasanlage 6 bestimmt werden. Die Drosselung des Massenstroms durch die Frischluftzufuhr 8, die Niederdruckabgasrückführung 11 und die Abgasanlage 6 kann beispielsweise aus Konstruktionsdaten des Verbrennungsmotorsystems 1 oder bei einer vorab durchgeführten Messung als ein fester Wert oder ein Kennfeld vorgegeben sein und in einer entsprechenden Steuervorrichtung des Verbrennungsmotorsystems 1 abgelegt sein.

Bei einer weiteren beispielhaften Bestimmung des Drucks im Ausgang der Abgasanlage 6 befindet sich der Verbrennungsmotor 2 im Stillstand, das Niederdruckabgasrückführungsventil 13 ist vollständig geöffnet, die Abgasklappe 16 ist geöffnet, die Drosselklappe 15 ist geöffnet und das Hochdruckabgasrückführungsventil 12 ist geöffnet. Es wird angenommen, dass am Ende der Abgasanlage ein Unterdruck herrscht. Der Massenstrom, der mit dem Heißfilmluftmassenmesser 14 gemessen wird, geht zum Teil durch die Niederdruckabgasrückführung 11 und zu einem weiteren Teil durch den Verdichter 7, die Drosselklappe 15, die Hochdruckabgasrückführung 10 und die Turbine 4 in die Abgasanlage 6. Durch Schließen der Abgasklappe 16 kann der Massenstrom des Heißfilmluftmassenmessers 14 verändert werden. Bei geschlossener Abgasklappe fließt kein Massenstrom mehr über das Niederdruckabgasrückführungsventil 11 und das Hochdruckabgasrückführungsventil 12, so dass in diesem Zustand der Heißfilmluftmassenmesser 14 kalibriert werden kann. Bei geöffneter Abgasklappe 16 kann der Unterdruck an dem Ausgang der Abgasanlage 6 aus dem von dem Heißfilmluftmassenmesser 14 gemessenen Massenstrom und einer Drosselung des Massenstroms durch das Verbrennungsmotorsystem 1 bestimmt werden. Die Drosselung des Massenstroms durch das Verbrennungsmotorsystem 1 wird durch die Drosselung durch die Frischluftzufuhr 8, die Abgasrückführungen 10 und 11, die Drosselklappe 15, den Verdichter 7, der Turbine 4 und die Abgasanlage 6 bestimmt. Diese Drosselung kann beispielsweise aus Konstruktionsdaten oder mit Hilfe einer vorab durchgeführten Messung bereitgestellt werden. In diesem Beispiel kann ein erheblich größerer Massenstrom durch das Verbrennungsmotorsystem 1 geleitet werden als in den beiden vorhergehenden Beispielen. Dadurch können Messungenauigkeiten des Heißfilmluftmassenmessers 14 verringert werden. Falls am Ende der Abgasanlage ein Überdruck besteht, dreht sich im Wesentlichen die Strömungsrichtung des Massenstroms durch die Abgasrückführungsventile 13, 12 um, d.h. die Massenströme fließen von der Abgasseite zur Frischluftseite, wie auch im realen Motorbetrieb. Dadurch ändert sich die Wirkrichtung der Öffnung der Abgasrückführungsventile 12, 13 bzw. der Abgasklappe 16, d.h., ein Öffnen eines Abgasrückführungsventils 12, 13 oder der Abgasklappe 16 reduziert jetzt den Massenstrom an dem Heißfilmluftmassenmesser 14.

Bei allen vorgenannten Beispielen werden im Stillstand des Motors alle Ventile und Klappen modellbasiert über eine allgemein bekannte Beschreibung einer Drosselung bzw. Durchflussfunktion berechnet. Eingangsgrößen für die Modellrechnung sind der Wert des Heißfilmluftmassenmessers 14 und der Umgebungsdruck. Der Heißfilmluftmassenmesser 14 sollte in der Lage sein, Rückströmungen zu erkennen und zu messen, um eine Unterscheidung zwischen einem Überdruck und einem Unterdruck am Ende der Abgasanlage 6 durchführen zu können. Mit der modellbasierten Beschreibung lässt sich bei bekanntem Massenstrom und bekanntem Druck auf einer Seite des Ventils und bekannter Ventilposition der fehlende Druck auf der anderen Seite des Ventils berechnen.

Um den Druckzustand am Ende der Abgasanlage 6 zu ermitteln, kann die Drosselung des Massenstroms durch das Verbrennungsmotorsystem 1 empirisch beschrieben werden. Beispielsweise kann eine Kennlinie definiert werden, welche abhängig vom (offsetkorrigierten) Heißfilmluftmassenmesser-Massenstrom für eine bestimmte Ventilkonstellation, beispielsweise Niederdruckabgasrückführungsventil 13 und Abgasklappe 16 geöffnet und Hochdruckabgasrückführungsventil 12 und Drosselklappe 15 geschlossen, den Druckunterschied zwischen Umgebungsdruck und dem Ende der Abgasanlage 6 beinhaltet. Werden nur bestimmte Positionskombinationen der Ventile und Klappen angefahren, reduzieren sich die veränderlichen Größen in der Drosselung so stark, dass das Verhalten der Niederdruckabgasrückführungsstrecke und der Abgasanlage mit nur einer Kennlinie beschrieben werden kann.

Zusammenfassend wird gemäß der vorliegenden Erfindung der Abgasdruck am Ende der Abgasanlage durch eine modellbasierte Adaption bestimmt. Ventile und Klappen werden im Verbrennungsmotorsystem durch Drosselmodelle beschrieben. Dabei wird von einem bekannten Massenstrom durch die Niederdruckabgasrückführung bzw. die Abgasklappe ausgegangen, beispielsweise einem offsetkorrigierten Heißfilmluftmassenmesser-Massenstrom bei stehendem Motor, und über das Modell des Niederdruckabgasrückführungsventils und/oder der Abgasklappe ausgehend vom Umgebungsdruck der Druck am Ende der Abgasanlage modelliert. Die Differenz aus dem Ergebnis der Modellierung und dem gemessenen Umgebungsdruck ist der Anpassungswert für den Zustand am Ende der Abgasanlage 6. Diese Adaption wird bei stehendem Motor durchgeführt. Darüber hinaus können die Ventile und Klappen des Verbrennungsmotorsystems 1 in vorbestimmte Positionen gebracht werden, wodurch die Adaption auch im Betrieb des Motors durchgeführt werden kann, beispielsweise in einem Schubbetrieb des Motors, wobei in diesem Fall jedoch das Ergebnis ungenauer hinsichtlich einer Fehlerzuordnung und die Positionsvorgabe einen Einfluss auf Emissionen und Fahrverhalten des Verbrennungsmotorsystems haben können. Die Offsetfehler-Kalibrierung des Heißfilmluftmassenmesser-Massenstroms kann bei stehendem Motor zu einem stark vereinfachten empirischen Modell, beispielsweise einer Kennlinie, führen.

## Patentansprüche

1. Verfahren zur Bestimmung eines Drucks im Ausgang einer Abgasanlage (6) eines Verbrennungsmotorsystems (1) eines Fahrzeugs, wobei das Verbrennungsmotorsystem (1) aufweist:
einen Verbrennungsmotor (2) mit einem Saugrohr (9) und einem Abgasausgang
(5);
eine Frischluftzufuhr (8), die das Saugrohr (9) des Verbrennungsmotors (2) mit der Umgebung verbindet;
eine Abgasanlage (6), die den Abgasausgang (5) des Verbrennungsmotors (2) mit der Umgebung verbindet;
einen Abgasturbolader (3) mit einem zwischen der Frischluftzufuhr (8) und dem Saugrohr (9) angeordneten Verdichter (7) und einer zwischen dem Abgasausgang (5) des Verbrennungsmotors (2) und der Abgasanlage (6) angeordneten Turbine (4) sowie
eine Niederdruckabgasrückführung (11) mit einem Niederdruckabgasrückführungsventil (13), welche die Frischluftzufuhr (8) mit dem Ausgang der Abgasanlage (6) koppelt, und das Verfahren die Schritte umfasst:
- Erfassen eines Massenstroms durch das Verbrennungsmotorsystem (1),
- Erfassen eines Umgebungsdrucks an der Frischluftzufuhr (8) des Verbrennungsmotorsystems (1),
- Bestimmen einer Drosselung des Massenstroms durch das Verbrennungsmotorsystem (1) mittels eines Strömungsmodells des Verbrennungsmotorsystems (1), in welches die folgenden Größen einfließen:
- eine Motorfüllung des Verbrennungsmotors (2), welche aus einem Saugrohrdruck und einer Saugrohrtemperatur bestimmt wird,
- ein Frischluftmassenstrom in der Frischluftzufuhr (8), und
- ein Massenstrom in der Niederdruckabgasrückführung (11), und
- Bestimmen des vom Umgebungsdruck abweichenden Drucks im Ausgang der Abgasanlage (6) in Abhängigkeit von dem Massenstrom, dem Umgebungsdruck, der Drosselung des Massenstroms durch das Verbrennungsmotorsystem (1) und einer Position des Niederdruckabgasrückführungsventils (13).

2. Verfahren nach Anspruch 1, wobei die Drosselung des Massenstroms durch das Verbrennungsmotorsystem (1) bei einem Stillstand eines Verbrennungsmotors (2) des Verbrennungsmotorsystems (1) bestimmt wird.

3. Verfahren nach Anspruch 2, wobei die Drosselung des Massenstroms durch das Verbrennungsmotorsystem (1) mittels eines Bestimmens einer Drosselung eines Massenstroms durch die Niederdruckabgasrückführung (11) in Abhängigkeit von einer Einstellung des Niederdruckabgasrückführungsventils (13) bestimmt wird.

4. Verfahren nach Anspruch 3, wobei die Drosselung des Massenstroms durch die Niederdruckabgasrückführung (11) mittels einer Kennlinie oder eines Kennfeldes bestimmt wird.

5. Verfahren nach Anspruch 3 oder 4, wobei das Verbrennungsmotorsystem (1) eine Drosselklappe (15) zur Beeinflussung eines Massenstroms von der Frischluftzufuhr (8) zu einem Saugrohr (9) des Verbrennungsmotors (2) aufweist, wobei das Bestimmen der Drosselung des Massenstroms durch das Verbrennungsmotorsystem (1) ein Bestimmen einer Drosselung eines Massenstroms durch den Verbrennungsmotor (2) und die Drosselklappe (15) in Abhängigkeit von einer Einstellung der Drosselklappe (15) umfasst.

6. Verfahren nach Anspruch 5, wobei das Fahrzeug einen Abgasturbolader (3) und eine Hochdruckabgasrückführung (10) umfasst, wobei der Abgasturbolader (3) eine Turbine (4), welche zwischen einem Abgasausgang (5) des Verbrennungsmotors (2) und der Abgasanlage (6) angeordnet ist, und einen mit der Turbine (4) gekoppelten Verdichter (7), welcher zwischen der Frischluftzufuhr (8) und dem Saugrohr (9) angeordnet ist, umfasst, wobei die Hochdruckabgasrückführung (10) den Abgasausgang (5) mit dem Saugrohr (9) über ein Hochdruckabgasrückführungsventil (12) koppelt,
wobei das Bestimmen der Drosselung des Massenstroms durch das Verbrennungsmotorsystem (1) ein Bestimmen einer Drosselung eines Massenstroms durch den Verdichter (7), die Turbine (4) und die Hochdruckabgasrückführung (10) in Abhängigkeit von einer Einstellung des Hochdruckabgasrückführungsventil (12) umfasst.

7. Verfahren nach Anspruch 6, wobei zur Durchführung des Verfahrens die Drosselklappe (15) geschlossen wird, das Hochdruckabgasrückführungsventil (12) geschlossen wird, und das Niederdruckabgasrückführungsventil (13) geöffnet wird.

8. Verfahren nach Anspruch 6, wobei zur Durchführung des Verfahrens die Drosselklappe (15) geöffnet wird, das Hochdruckabgasrückführungsventil (12) geöffnet wird, und das Niederdruckabgasrückführungsventil (13) geöffnet wird.

9. Verfahren nach Anspruch 6, wobei mehrere Drücke im Ausgang der Abgasanlage (6) bei unterschiedlichen Einstellungen der Drosselklappe (15), des Hochdruckabgasrückführungsventils (12) und des Niederdruckabgasrückführungsventils (13) nacheinander bestimmt werden, und wobei aus den mehreren Drücken der Druck im Ausgang der Abgasanlage (6) durch Mittelung bestimmt wird.

10. Verfahren nach Anspruch 1, wobei die Drosselung des Massenstroms durch das Verbrennungsmotorsystem (1) in einem Schubbetrieb eines Verbrennungsmotors (2) des Verbrennungsmotorsystems (1) bestimmt wird.

11. Verfahren nach Anspruch 10, wobei das Verbrennungsmotorsystem (1) eine Drosselklappe (15) zur Beeinflussung eines Massenstroms von der Frischluftzufuhr (8) zu einem Saugrohr (9) des Verbrennungsmotors (2) aufweist, wobei die Drosselklappe (15) zur Durchführung des Verfahrens geschlossen wird und die Drosselung des Massenstroms durch das Verbrennungsmotorsystem (1) mittels eines Bestimmens einer Drosselung eines Massenstroms durch die Niederdruckabgasrückführung (11) in Abhängigkeit von einer Einstellung des Niederdruckabgasrückführungsventils (13) bestimmt wird.

12. Verfahren nach Anspruch 11, wobei das Fahrzeug einen Abgasturbolader (3) und eine Hochdruckabgasrückführung (10) umfasst, wobei der Abgasturbolader (3) eine Turbine (4), welche zwischen einem Abgasausgang (5) des Verbrennungsmotors (2) und der Abgasanlage (6) angeordnet ist, und einen mit der Turbine (4) gekoppelten Verdichter (7), welcher zwischen der Frischluftzufuhr (8) und dem Saugrohr (9) angeordnet ist, umfasst, wobei die Hochdruckabgasrückführung (10) den Abgasausgang (5) mit dem Saugrohr (9) über ein Hochdruckabgasrückführungsventil (12) koppelt,
wobei zur Durchführung des Verfahrens das Hochdruckabgasrückführungsventil (12) geöffnet wird.

13. Verfahren nach Anspruch 6 oder 12, wobei der Massenstrom durch das Verbrennungsmotorsystem (1) mittels eines Heißfilmluftmassenmessers (14) in der Frischluftzufuhr (8) erfasst wird, wobei das Verfahren ferner eine Kalibrierung des Heißfilmluftmassenmessers (14) umfasst, wobei zur Durchführung des Verfahrens die Drosselklappe (15) geschlossen wird, das Hochdruckabgasrückführungsventil (12) geöffnet wird und das Niederdruckabgasrückführungsventil (13) geschlossen wird.

14. Verbrennungsmotorsystem (1) für ein Fahrzeug, umfassend
- einen Verbrennungsmotor (2) mit einem Saugrohr (9) und einem Abgasausgang (5);
- eine Frischluftzufuhr (8), die das Saugrohr (9) des Verbrennungsmotors (2) mit der Umgebung verbindet;
- eine Abgasanlage (6), die den Abgasausgang (5) des Verbrennungsmotors (2) mit der Umgebung verbindet;
- einen Abgasturbolader (3) mit einem zwischen der Frischluftzufuhr (8) und dem Saugrohr (9) angeordneten Verdichter (7) und einer zwischen dem Abgasausgang (5) des Verbrennungsmotors (2) und der Abgasanlage (6) angeordneten Turbine (4);
- eine Niederdruckabgasrückführung (11) mit einem Niederdruckabgasrückführungsventil (13), welche die Frischluftzufuhr (8) mit dem Ausgang der Abgasanlage (6) koppelt;
- ein erstes Erfassungsmittel (14) zum Erfassen eines Massenstroms durch das Verbrennungsmotorsystem (1);
- ein zweites Erfassungsmittel zum Erfassen eines Umgebungsdrucks an der Frischluftzufuhr (8) des Verbrennungsmotorsystems (1) und
- eine Verarbeitungseinheit, welche ausgestaltet ist, einen vom Umgebungsdruck abweichenden Druck in einem Ausgang der Abgasanlage (6) gemäß einem Verfahren nach einem der Ansprüche 1 bis 13 zu bestimmen.

## Claims

1. A method for determining a pressure in the output of an exhaust gas system (6) of an internal combustion engine system (1) of a vehicle, wherein the internal combustion engine system (1) has:
an internal combustion engine (2) with a suction pipe (9) and an exhaust gas output (5);
a fresh air feed (8), which connects the suction pipe (9) of the internal combustion engine (2) with the environment;
an exhaust gas system (6), which connects the exhaust gas output (5) of the internal combustion engine (2) with the environment;
an exhaust gas turbo charger (3) with a compressor (7) arranged between the fresh air feed (8) and the suction pipe (9) and a turbine (4) arranged between the exhaust gas output (5) of the internal combustion engine (2) and the exhaust gas system (6) as well as
a low pressure exhaust gas recirculation (11) with a low pressure exhaust gas recirculation valve (13), which couples the fresh air feed (8) with the output of the exhaust gas system (6),
and the method comprises the steps:
- detection of a mass flow through the internal combustion engine system (1),
- detection of an ambient pressure at the fresh air feed (8) of the internal combustion engine system (1),
- determination of a throttling of the mass flow through the internal combustion engine system (1) by means of a flow model of the internal combustion engine system (1), in which the following quantities are included:
- an engine filling of the internal combustion engine (2), which is determined from a suction pipe pressure and a suction pipe temperature,
- a fresh air mass flow in the fresh air feed (8), and
- a mass flow in the low pressure exhaust gas recirculation (11), and
- determination of the pressure deviating from the ambient pressure in the output of the exhaust gas system (6) depending on the mass flow, the ambient pressure, the throttling of the mass flow through the internal combustion engine system (1) and a position of the low pressure exhaust gas recirculation valve (13).

2. A method according to Claim 1, wherein the throttling of the mass flow through the internal combustion engine system (1) is determined when an internal combustion engine (2) of the internal combustion engine system (1) is at a standstill.

3. A method according to Claim 2, wherein the throttling of the mass flow through the internal combustion system (1) is determined by means of a determination of a throttling of a mass flow through the low pressure exhaust gas recirculation (11) depending on a setting of the low pressure exhaust gas recirculation valve (13).

4. A method according to Claim 3, wherein the throttling of the mass flow through the low pressure exhaust gas recirculation (11) is determined by means of a characteristic curve or a characteristic diagram.

5. A method according to Claim 3 or 4, wherein the internal combustion engine system (1) has a throttle valve (15) for influencing the mass flow of the fresh air feed (8) to the suction pipe (9) of the internal combustion engine (2), wherein the determination of the throttling of the mass flow through the internal combustion engine system (1) comprises a determination of a throttling of a mass flow through the internal combustion engine (2) and the throttle valve (15) depending on a setting of the throttle valve (15).

6. A method according to Claim 5, wherein the vehicle comprises an exhaust gas turbo charger (3) and a high pressure exhaust gas recirculation (10), wherein the exhaust gas turbo charger (3) comprises a turbine (4), which is arranged between an exhaust gas output (5) of the internal combustion engine (2) and the exhaust gas system (6), and a compressor (7) coupled with the turbine (4), which is arranged between the fresh air feed (8) and the suction pipe (9), wherein the high pressure exhaust gas recirculation (10) couples the exhaust gas output (5) with the suction pipe (9) via a high pressure exhaust gas recirculation valve (12), wherein the determination of the throttling of the mass flow through the internal combustion engine system (1) comprises a determination of a throttling of a mass flow through the compressor (7), the turbine (4) and the high pressure exhaust gas recirculation (10) depending on a setting of the high pressure exhaust gas recirculation valve (12).

7. A method according to Claim 6, wherein, in order to implement the method, the throttle valve (15) is closed, the high pressure exhaust gas recirculation valve (12) is closed, and the low pressure exhaust gas recirculation valve (13) is opened.

8. A method according to Claim 6, wherein, in order to implement the method, the throttle valve (15) is opened, the high pressure exhaust gas recirculation valve (12) is opened, and the low pressure exhaust gas recirculation valve (13) is opened.

9. A method according to Claim 6, wherein a plurality of pressures in the output of the exhaust gas system (6) are determined successively at different settings of the throttle valve (15), of the high pressure exhaust gas recirculation valve (12) and of the low pressure exhaust gas recirculation valve (13), and wherein the pressure in the output of the exhaust gas system (6) is determined by averaging from the plurality of pressures.

10. A method according to Claim 1, wherein the throttling of the mass flow through the internal combustion engine system (1) is determined in an overrun mode of an internal combustion engine (2) of the internal combustion engine system (1).

11. A method according to Claim 10, wherein the internal combustion engine system (1) has a throttle valve (15) for influencing a mass flow from the fresh air feed (8) to a suction pipe (9) of the internal combustion engine (2), wherein the throttle valve (15), in order to implement the method, is closed and the throttling of the mass flow through the internal combustion engine system (1) is determined by means of a determination of a throttling of a mass flow through the low pressure exhaust gas recirculation (11) depending on a setting of the low pressure exhaust recirculation valve (13).

12. A method according to Claim 11, wherein the vehicle comprises an exhaust gas turbo charger (3) and a high pressure exhaust gas recirculation (10), wherein the exhaust gas turbo charger (3) comprises a turbine (4), which is arranged between an exhaust gas output (5) of the internal combustion engine (2) and the exhaust gas system (6), and a compressor (7) coupled with the turbine (4), which is arranged between the fresh air feed (8) and the suction pipe (9), wherein the high pressure exhaust gas recirculation (10) couples the exhaust gas output (5) with the suction pipe (9) via a high pressure exhaust gas recirculation valve (12), wherein, in order to implement the method, the high pressure exhaust gas recirculation valve (12) is opened.

13. A method according to Claim 6 or 12, wherein the mass flow through the internal combustion engine system (1) is detected by means of a hot-film air-flow sensor (14) in the fresh air feed (8) wherein the method furthermore comprises a calibration of the hot-film air-flow sensor (14), wherein, in order to implement the method, the throttle valve (15) is closed, the high pressure exhaust gas recirculation valve (12) is opened and the low pressure exhaust air recirculation valve (13) is closed.

14. An internal combustion engine system (1) for a vehicle, comprising
- an internal combustion engine (2) with a suction pipe (9) and an exhaust gas output (5);
- a fresh air feed (8), which connects the suction pipe (9) of the internal combustion engine (2) with the environment;
- an exhaust gas system (6), which connects the exhaust gas output (5) of the internal combustion engine (2) with the environment;
- an exhaust gas turbo charger (3) with a compressor (7) arranged between the fresh air feed (8) and the suction pipe (9) and a turbine (4) arranged between the exhaust gas output (5) of the internal combustion engine (2) and the exhaust gas system (6);
- a low pressure exhaust gas recirculation (11) with a low pressure exhaust gas recirculation valve (13), which couples the fresh air feed (8) with the output of the exhaust gas system (6);
- a first detection means (14) for detecting a mass flow through the internal combustion engine system (1);
- a second detection means for detecting an ambient pressure at the fresh air feed (8) of the internal combustion engine system (1) and
- a processing unit which is designed to determine a pressure deviating from the ambient pressure in an output of the exhaust gas system (6) according to a method according to any one of Claims 1 to 13.

## Revendications

1. Procédé de détermination d'une pression à la sortie d'une installation des gaz d'échappement (6) d'un système de moteur à combustion (1) d'un véhicule, le système de moteur à combustion (1) comportant :
un moteur à combustion (2) avec un tuyau d'admission (9) et une sortie des gaz d'échappement (5) ;
une amenée d'air frais (8) qui raccorde le tuyau d'admission (9) du moteur à combustion (2) à l'environnement ;
une installation des gaz d'échappement (6) qui raccorde la sortie des gaz d'échappement (5) du moteur à combustion (2) à l'environnement ;
un turbocompresseur à gaz d'échappement (3) avec un compresseur (7) disposé entre l'amenée d'air frais (8) et le tuyau d'admission (9) et avec une turbine (4) disposée entre la sortie des gaz d'échappement (5) du moteur à combustion (2) et l'installation des gaz d'échappement (6), ainsi
qu'une recirculation des gaz d'échappement basse pression (11) avec une soupape de recirculation des gaz d'échappement basse pression (13) qui couple l'amenée d'air frais (8) avec la sortie de l'installation des gaz d'échappement (6),
et le procédé comportant les étapes suivantes :
- détection d'un flux massique à travers le système de moteur à combustion (1),
- détection d'une pression ambiante au niveau de l'amenée d'air frais (8) du système de moteur à combustion (1),
- détermination d'un étranglement du flux massique à travers le système de moteur à combustion (1) au moyen d'un modèle d'écoulement du système de moteur à combustion (1) dans lequel entrent les grandeurs suivantes:
- un remplissage moteur du moteur à combustion (2) qui est déterminé à partir d'une pression dans le tuyau d'admission et d'une température du tuyau d'admission,
- un flux massique d'air frais dans l'amenée d'air frais (8), et
- un flux massique dans la recirculation des gaz d'échappement basse pression (11), et
- détermination de la pression ambiante à la sortie de l'installation des gaz d'échappement (6) qui diffère de la pression ambiante, en fonction du flux massique, de la pression ambiante, de l'étranglement du flux massique à travers le système de moteur à combustion (1) et d'une position de la soupape de recirculation des gaz d'échappement basse pression (13).

2. Procédé selon la revendication 1, l'étranglement du flux massique à travers le système de moteur à combustion (1) étant déterminé lors d'un arrêt d'un moteur à combustion (2) du système de moteur à combustion (1).

3. Procédé selon la revendication 2, l'étranglement du flux massique à travers le système de moteur à combustion (1) étant déterminé au moyen d'une détermination d'un étranglement d'un flux massique à travers la recirculation des gaz d'échappement basse pression (11) en fonction d'un réglage de la soupape de recirculation des gaz d'échappement basse pression (13).

4. Procédé selon la revendication 3, l'étranglement du flux massique à travers la recirculation des gaz d'échappement basse pression (11) étant déterminé au moyen d'une courbe caractéristique ou d'un champ caractéristique.

5. Procédé selon la revendication 3 ou 4, le système de moteur à combustion (1) comportant un papillon des gaz (15) destiné à influencer un flux massique à partir de l'amenée d'air frais (8) vers un tuyau d'admission (9) du moteur à combustion (2), la détermination de l'étranglement du flux massique à travers le système de moteur à combustion (1) comprenant une détermination d'un étranglement d'un flux massique à travers le moteur à combustion (2) et le papillon des gaz (15) en fonction d'un réglage du papillon des gaz (15) .

6. Procédé selon la revendication 5, le véhicule comprenant un turbocompresseur à gaz d'échappement (3) et une recirculation des gaz d'échappement haute pression (10), le turbocompresseur à gaz d'échappement (3) comprenant une turbine (4), qui est disposée entre une sortie des gaz d'échappement (5) du moteur à combustion (2) et l'installation des gaz d'échappement (6), et un compresseur (7), couplé à la turbine (4), qui est disposé entre l'amenée d'air frais (8) et le tuyau d'admission (9), la recirculation des gaz d'échappement haute pression (10) couplant la sortie des gaz d'échappement (5) avec le tuyau d'admission (9) par le biais d'une soupape de recirculation des gaz d'échappement haute pression (12), la détermination de l'étranglement du flux massique à travers le système de moteur à combustion (1) comprenant une détermination d'un étranglement d'un flux massique à travers le compresseur (7), la turbine (4) et la recirculation des gaz d'échappement haute pression (10) en fonction d'un réglage de la soupape de recirculation des gaz d'échappement haute pression (12).

7. Procédé selon la revendication 6, dans lequel, pour la réalisation du procédé, le papillon des gaz (15) est fermé, la soupape de recirculation des gaz d'échappement haute pression (12) est fermée et la soupape de recirculation des gaz d'échappement basse pression (13) est ouverte.

8. Procédé selon la revendication 6, dans lequel, pour la réalisation du procédé, le papillon des gaz (15) est ouvert, la soupape de recirculation des gaz d'échappement haute pression (12) est ouverte et la soupape de recirculation des gaz d'échappement basse pression (13) est ouverte.

9. Procédé selon la revendication 6, plusieurs pressions étant déterminées successivement à la sortie de l'installation des gaz d'échappement (6) pour différents réglages du papillon des gaz (15), de la soupape de recirculation des gaz d'échappement haute pression (12) et de la soupape de recirculation des gaz d'échappement basse pression (13), et la pression à la sortie de l'installation des gaz d'échappement (6) étant déterminée en calculant la moyenne des plusieurs pressions.

10. Procédé selon la revendication 1, l'étranglement du flux massique à travers le système de moteur à combustion (1) étant déterminé dans un mode en poussée d'un moteur à combustion (2) du système de moteur à combustion (1).

11. Procédé selon la revendication 10, le système de moteur à combustion (1) comportant un papillon des gaz (15) destiné à influencer un flux massique à partir de l'amenée d'air frais (8) vers un tuyau d'admission (9) du moteur à combustion (2), le papillon des gaz (15) étant fermé pour la réalisation du procédé, et l'étranglement du flux massique à travers le système de moteur à combustion (1) étant déterminé au moyen d'une détermination d'un étranglement d'un flux massique à travers la recirculation des gaz d'échappement basse pression (11) en fonction d'un réglage de la soupape de recirculation des gaz d'échappement basse pression (13).

12. Procédé selon la revendication 11, le véhicule comprenant un turbocompresseur à gaz d'échappement (3) et une recirculation des gaz d'échappement haute pression (10), le turbocompresseur à gaz d'échappement (3) comprenant une turbine (4) qui est disposée entre une sortie des gaz d'échappement (5) du moteur à combustion (2) et l'installation des gaz d'échappement (6), et un compresseur (7), couplé avec la turbine (4), qui est disposé entre l'amenée d'air frais (8) et le tuyau d'admission (9), la recirculation des gaz d'échappement haute pression (10) couplant la sortie des gaz d'échappement (5) avec le tuyau d'admission (9) par le biais d'une soupape de recirculation des gaz d'échappement haute pression (12), la soupape de recirculation des gaz d'échappement haute pression (12) étant ouverte pour la réalisation du procédé.

13. Procédé selon la revendication 6 ou 12, le flux massique à travers le système de moteur à combustion (1) étant détecté au moyen d'un débitmètre d'air massique à film chaud (14) dans l'amenée d'air frais (8), le procédé comprenant en outre un étalonnage du débitmètre d'air massique à film chaud (14), dans lequel, pour la réalisation du procédé, le papillon des gaz (15) est fermé, la soupape de recirculation des gaz d'échappement haute pression (12) est ouverte et la soupape de recirculation des gaz d'échappement basse pression (13) est fermée.

14. Système de moteur à combustion (1) pour un véhicule, comprenant
- un moteur à combustion (2) avec un tuyau d'admission (9) et une sortie des gaz d'échappement (5) ;
- une amenée d'air frais (8) qui raccorde le tuyau d'admission (9) du moteur à combustion (2) à l'environnement ;
- une installation des gaz d'échappement (6) qui raccorde la sortie des gaz d'échappement (5) du moteur à combustion (2) à l'environnement ;
- un turbocompresseur à gaz d'échappement (3) avec un compresseur (7) disposé entre l'amenée d'air frais (8) et le tuyau d'admission (9) et avec une turbine (4) disposée entre la sortie des gaz d'échappement (5) du moteur à combustion (2) et l'installation des gaz d'échappement (6),
- une recirculation des gaz d'échappement basse pression (11) avec une soupape de recirculation des gaz d'échappement basse pression (13) qui couple l'amenée d'air frais (8) avec la sortie de l'installation des gaz d'échappement (6),
- un premier moyen de détection (14) destiné à la détection d'un flux massique à travers le système de moteur à combustion (1) ;
- un deuxième moyen de détection destiné à la détection d'une pression ambiante au niveau de l'amenée d'air frais (8) du système de moteur à combustion (1) et
- une unité de traitement qui est constituée pour déterminer une pression dans une sortie de l'installation des gaz d'échappement (6) qui diffère de la pression ambiante selon un procédé selon l'une des revendications 1 à 13.
